# NEUE EUROPÄISCHE PATENTSCHRIFT

(11) **EP 2 134 795 B2**
(45) Veröffentlichungstag und Bekanntmachung des Hinweises auf die Entscheidung über den Einspruch: **11.01.2017**
(45) Hinweis auf die Patenterteilung: 30.10.2013
(21) Anmeldenummer: 08748707.0
(22) Anmeldetag: 01.04.2008
(51) Int. Cl.: C09D 1/00, C09D 5/18, B01J 23/04, B01J 37/02

(54) **BESCHICHTUNGSMATERIAL MIT EINER KATALYTISCHEN AKTIVITÄT UND VERWENDUNG DES BESCHICHTUNGSMATERIALS**
COATING MATERIAL HAVING A CATALYTIC ACTIVITY AND USE OF SAID COATING MATERIAL
MATÉRIAU DE REVÊTEMENT À ACTIVITÉ CATALYTIQUE ET SON UTILISATION

(30) Priorität: 05.04.2007 DE 102007016946; 23.07.2007 DE 102007034633
(43) Veröffentlichungstag der Anmeldung: 23.12.2009
(73) Patentinhaber: NANO-X GmbH, 66130 Saarbrücken (DE); ElringKlinger AG, 72581 Dettingen/Erms (DE)
(72) Erfinder: SEPEUR, Stefan, 66787 Wadgassen (DE); GROSS, Frank, 66663 Merzig (DE); FRENZER, Gerald, 66130 Saarbrücken (DE)
(74) Vertreter: Wieske, Thilo
(86) Internationale Anmeldenummer: PCT/DE2008/000531
(87) Internationale Veröffentlichungsnummer: WO 2008/122266

(56) Entgegenhaltungen:
- EP-A- 1 355 048
- EP-A1- 1 355 048
- EP-B1- 0 207 367
- EP-B2- 0 503 500
- WO-A1-89/04716
- WO-A1-2006/044268
- WO-A1-2006/084899
- WO-A2-02/50191
- DE-A1-102005 027 789
- GB-A- 586 132
- GB-A- 586 132
- JP-A- 2002 159 859
- US-A- 3 266 477
- US-A- 3 266 477
- US-A- 4 060 662
- US-A- 4 060 662
- US-A- 5 212 130
- US-A- 5 212 130
- US-A- 5 670 259
- US-A- 5 670 259
- US-B1- 6 350 421
- US-B1- 6 350 421
- Englische Übersetzung der JP-A-55 75740
- VORLOW S. ET AL: 'The catalytic activity and selectivity of supported vanadia catalysts doped withalkali metal sulfates' APPLIED CATALYSIS Bd. 17, Nr. 1, 1985, Seiten 87 - 101
- REDDY B.M. ET AL: 'Influence of alkaline earth metal on acid-base characteristics of V²O5/MO-TiO² (M=Ca, Sr and Ba) catalysts' JOURNAL OF MOLECULAR CATALYSIS A: CHEMICAL Bd. 276, 12 Juli 2007, Seiten 197 - 204
- ZHAO Z. ET AL: 'Effect of alkaline earth metals on catalytic performance of HY zeolite for alkylation of x-methylnaphthalene with long-chain olefins' MICROPOROUS AND MESOPOROUS Bd. 94, 2006, Seiten 105 - 112
- LIANG Q. ET AL: 'Selective oxidation of soot over Cu doped ceria/ceria-zirconia catalysts' CATALYSIS COMMUNICATIONS Bd. 9, 2008, Seiten 202 - 206
- AVGOUROPOULOS G. ET AL: 'CuO-CeO² mixed oxide catalysts for the selective oxidation of carbon monoxide inexcess hydrogen' CATALYSIS LETTERS Bd. 73, Nr. 1, 2001, Seiten 33 - 40
- VIDMAR P. ET AL: 'Effects of Trivalent Dopants on the Redox Properties of Ce0.6Zr0.4O²Mixed Oxide' JOURNAL OF CATALYSIS Bd. 171, 1987, Seiten 160 - 168

## Beschreibung

Die Erfindung betrifft ein Beschichtungsmaterial mit einer katalytischen Aktivität zur Reduktion der Verbrennungstemperatur von Ruß und organischen Substanzen. Sie betrifft weiterhin die Verwendung des Beschichtungsmaterials.

Aus dem Stand der Technik ist bekannt, daß Übergangsmetalloxide, insbesondere Ce-, La-, Mn-, Co-, Cu- und Zr-Oxide, katalytische Aktivität gegenüber der Oxidation von Ruß und flüchtigen organischen Verbindungen besitzen. Diese Verbindungen müssen allerdings bezüglich ihrer Zusammensetzung (z.B. Mischoxid-oder Legierungsbildung) und Struktur (z.B. Porosität und Kristallinität) für die jeweilige Anwendung aufwendig maßgeschneidert werden.

Die Zündtemperatur für die unkatalysierte Selbstverbrennung von Ruß liegt bei einer Temperatur von etwa 600°C. Die EP 1 355 048 A1 beschreibt katalytisch aktive Beschichtungen in Rußpartikelfiltern, welche die Verbrennungstemperatur des Rußes auf Temperaturen von ca. 300 bis 350°C reduzieren. Die katalytisch aktiven Komponenten enthalten ebenfalls Übergangsmetalloxide der Elemente Ce, Zr, Mn, La, Nb oder Ta. Die Beschichtung wandelt während der Regenerationsphase des Partikelfilters die im Dieselabgas enthaltenen Stickoxide in adsorbierte Nitrate um, welche nach thermischer Desorption die Rußpartikel zu Kohlendioxid umwandeln. Zirkonoxide werden hierbei als Additiv insbesondere in Form von Ce/Zr-Mischoxiden eingesetzt.

Die WO 03/035774 A1 beschreibt eine katalytische Beschichtung für die Selbstreinigung von Öfen und Herden, welche aus einem Binder, einem anorganischem Polymer und poröse Teilchen bestehen. Poröse Teilchen können hierbei auch Übergangsmetalloxide sein. Die Entfernung organischer Bestandteile begründet sich hierbei auf eine pyrolytische Karbonisierung, d.h. Verbrennung bei Temperaturen über 500°C. Auf Basis dieser Beschichtung beschreibt die DE 103 14 513 A1 ein Katalysatorsystem zur Entfernung von Geruchsstoffen auf Koch-, Brat-, Back-, und Grillgeräten. Die WO 03/027348 A2 schlägt für die Selbstreinigung von Öfen und Herden eine hochporöse keramische Schicht vor, deren katalytische Aktivität bei 250-320°C liegt. Die hohe Porosität bewirkt ein hohes Saugvermögen, wodurch z. B. Fette aufgenommen, aufgespreitet und in Kombination mit der katalytischen Aktivität der Beschichtung abgebaut werden.

Die WO 00/59544 A1 beschreibt eine Beschichtungsmasse auf Silanbasis mit katalytischer oxidativer und desodorisierender Wirkung. Als katalytisch aktive Komponenten werden ebenfalls Übergangsmetalloxide eingesetzt. Die katalytische Aktivität dieser Beschichtungsmasse, welche auf einem Träger aufgetragen wird, beschränkt sich auf die Entfernung flüchtiger organischer Verbindungen aus der Umgebungsluft.

Alkalimetalle auf Metalloxiden als Support als Dieselrußkatalysatoren sind in der Literatur ebenfalls bekannt (E. N. Ponzi et al., Thermochim. Acta 421 (2004) 117; M. Ponzi et al., React. Kinet. Catal. Lett. 75 (2002) 63). Getestet wurden poröse Katalysatorpulver, deren Zündtemperaturen für die Rußverbrennung je nach Alkalimetall zwischen ca. 380°C und 580°C liegen. Als oxidierende Hilfskomponente müssen zusätzlich Stickoxide beaufschlagt werden.

Durch die Komplexität der katalytischen Zusammensetzungen, die im Stand der Technik genannt werden, begründet durch z. B. die Additivierung von anorganischen Partikeln, weisen diese Materialien eine starke Eigenfärbung auf und können in Beschichtungen nicht für optische Anwendungen eingesetzt werden.

Aufgabe der vorliegenden Erfindung ist es, ein katalytisch aktives. Beschichtungsmaterial zu schaffen, mit dem eine abriebfeste und auch für optische Anwendungen geeignete Beschichtung zur Verbrennung von Ruß und organischen Substanzen erstellt werden kann.

Diese Aufgabe wird erfindungsgemäß durch ein Beschichtungsmaterial gemäß dem Oberbegriff gelöst, wobei das Beschichtungsmaterial aus
- 20 bis 90 Gew.-% Verbindungen von Nebengruppenmetallen oder von Elementen der 3. und 4. Hauptgruppe, ausgewählt aus der Gruppe bestehend aus Zirkonium-, Aluminium-, Silizium-, Titan-, Eisen-, Germanium- und Galliumverbindungen,
- 10 bis 80 Gew.-% Alkaliverbindungen besteht, wobei der molare Anteil von Alkaliverbindungen höher ist als der molare Anteil von Verbindungen von Nebengruppenmetallen oder von Elementen der 3. oder 4. Hauptgruppe.

Überraschenderweise ist mit der erfindungsgemäßen katalytischen Zusammensetzung die Herstellung einer farblosen, transparenten bzw. transluzenten Beschichtung möglich, welche zudem eine hohe Abriebstabilität aufweist. Durch den relativ hohen Gehalt an Alkaliverbindungen wird eine deutliche Effizienzsteigerung des Beschichtungsmaterials erreicht.

Ein entscheidender Vorteil der Erfindung liegt im einfachen Aufbau der katalytischen Zusammensetzung.

Es liegt im Rahmen der Erfindung, daß die Alkaliverbindungen aus der Gruppe bestehend aus Natrium-, Kalium-, Cäsium- und Rubidiumverbindungen ausgewählt sind.

Weiterhin liegt es im Rahmen der Erfindung, dass das Beschichtungsmaterial mit einem Lösungsmittel, insbesondere mit Wasser, auf einen Feststoffgehalt zwischen 0,05 Gew.-% und 60 Gew.-%, vorzugsweise zwischen 2 und 20 Gew.-% verdünnt ist.

Das Beschichtungsmaterial kann im verdünnten oder unverdünnten Zustand aufgetragen werden. Ebenso ist es möglich, daß das Beschichtungsmaterial als Additiv in anderen Beschichtungsmaterialien, insbesondere Keramikschlickern, Nanosuspensionen, Glasfritten, Polymeren oder Sol-Gel-Systemen enthalten ist.

Die Anbindung an den Träger erfolgt durch anorganische Bindemittel, zusätzlich kann die aktive Komponente als Additiv zu bereits bestehenden Beschichtungsmassen zugefügt werden (z.B. Keramikschlickern, Nanosuspensionen, Glasfritten oder Sol-Gel-Systemen). Das erfindungsgemäße Beschichtungsmaterial kann auch einem Beschichtungssystem, wie es in der DE 10 2005 021 658 A1 beschrieben wird, zugegeben werden.

Den Erfindern ist es durch geeignete Wahl eines Binders gelungen, eine abriebfeste Beschichtung zu entwickeln. Die katalytische Aktivität der Beschichtung wird auch bei sichtbarer Beschädigung durch Abrieb (Kratzer) nicht beeinflusst. Die katalytische Verbrennungsaktivität der Beschichtung liegt im Bereich von 100 bis 550°C, bevorzugt zwischen 250 und 400°C und besonders bevorzugt zwischen 250 und 350°C. Die katalytische Aktivität fördert insbesondere die Verbrennung von organischen Substanzen und Ruß, insbesondere Kerzenruß, Dieselruß, Modellruß und flüchtigen Verbrennungsprodukten von Holz, Erdgas, Erdöl und Benzin.

Die Zündtemperatur für die Verbrennung von Russpartikeln liegt bei 100 bis 450°C, besonders bevorzugt bei 250 bis 350°C. Eine Beaufschlagung von Stickoxiden während der Verbrennung ist nicht notwendig, um diese Zündtemperaturen zu erreichen.

Im Rahmen der Erfindung liegt auch die Verwendung des erfindungsgemäßen Beschichtungsmaterials, wobei das Beschichtungsmaterial auf ein Substrat appliziert und getrocknet wird.

In diesem Zusammenhang ist es vorgesehen, daß das Substrat Glas, Metall, Halbmetall, Metalloxid, Kunststein, Naturstein, Beton, Putz, Keramik, Email, Glaskeramik, Kunststoff oder eine lackierte Oberfläche ist.

Mit Glas als Trägermaterial ergibt sich die Verwendung des Gegenstandes der Erfmdung als selbstreinigende Beschichtung auf Kaminglasscheiben, Backofensichtscheiben, Industriesichtscheiben für Verbrennungsprozesse in Haushaltsöfen, Kraftwerken, Kokereien, Stahlerzeugung und als Antihaftmittel auf Glaskeramik, vorzugsweise Glaskeramikkochfelder. Der Gegenstand der Erfindung kann in Kraftwerken oder Rohren auch genutzt werden, um Anbackungen bei erhöhten Temperaturen zu vermeiden. Auf anderen Trägem, wie z.B. Stahl oder Stein, beschichtet oder als Additiv in Beschichtungsmassen ergeben sich Anwendungen in Kraftwerksschloten, Brennkammern, Haushaltkaminrohren, als Grillbeschichtungen und Beschichtungen in Haushaltsgeräten. Anwendungen für die Dieselabgaskatalyse sind Motorinnenraumbeschichtungen und Beschichtungen für Abgasanlagen oder Partikelfilter. Das erfindungsgemäße Material kann auch genutzt werden, um den Zündzeitpunkt von Benzin, Diesel oder Kerosin in Motorbrennräumen zu beeinflussen. Das Beschichtungsmaterial kann ebenso für den industriellen Einsatz als Geruchskatalysator oder als Katalysator für chemische Oxidationsprozesse verwendet werden.

Es ist zweckmäßig, daß das Beschichtungsmaterial naßchemisch auf das Substrat appliziert wird, insbesondere durch Sprühen, Gießen, Fluten, Tauchen, Aufreiben, Schleudern, Walzen oder Drucken.

Hierbei ist es sinnvoll, daß das Beschichtungsmaterial mit einer Schichtdicke von 10 nm bis 100 µm, insbesondere von 0,5 bis 20 µm appliziert wird.

Weiterhin ist erfindungsgemäß vorgesehen, daß die Trocknung in einem Temperaturbereich von Raumtemperatur bis 1.000°C, insbesondere zwischen 100 und 600°C, während 1 Sekunde bis mehreren Stunden erfolgt.

In diesem Zusammenhang hat es sich als vorteilhaft erwiesen, daß die Trocknung in einem Umluftofen oder unter IR-Strahlung erfolgt.

Schließlich besteht eine Weiterbildung der Erfindung darin, daß die Trocknung in zwei Schritten.mit einer Vorhärtung bei niedriger Temperatur und einem zweiten Trocknungsschritt bei höherer Temperatur erfolgt.

Das Oxidationsvermögen der Beschichtung wird im Gegensatz zu üblichen Methoden (z. B. TGA/DTA) durch visuelle Beurteilung festgestellt. Hierzu wird eine Modellrußdispersion (1-5%ig in Lösemittel) auf eine Weise auf die Beschichtung gebracht, daß eine deckende Rußschicht vorhanden ist. Alternativ kann die Beschichtung auch mit Kerzenruß beaufschlagt werden. Zur Feststellung der Zündtemperatur der Rußverbrennung wird der beschichtete Träger mit der Rußschicht versehen in einem Ofen bei verschiedenen Temperaturen ausgelagert. Bei einer Temperatur von 100 bis 500°C, insbesondere bei 250 bis 350°C, ist die Rußschicht nach einer Stunde entweder nicht mehr vorhanden oder blättert ab, vermutlich aufgrund Enthaftung durch Oxidation der unteren Rußlage. Bei längeren Auslagerungszeiten (2-5 Stunden) reduziert sich diese Verbrennungstemperatur deutlich.

Nachfolgend wird die Erfindung anhand von Ausführungsbeispielen näher erläutert.

### Beispiel 1

2,27 g (3-Glycidoxypropyl)triethoxysilan (GPTES) und 1,51 g Kieselsol (Levasil 200s) werden 1 Stunde lang gerührt. Zu dieser Lösung wird 3,77 g Zirkonacetylacetonat, 0,99 g Natriumnitrat und 41,9 g Wasser gegeben und über Nacht gerührt.

### Vergleichsbeispiel 2

5,0 g Aluminiumoxid C (mittlere Primärteilchengröße 13 nm) werden in 95,0 g 5%iger Essigsäure mit einem Ultra-Turrax für 10 min bei 15000 U/min dispergiert. 5,5 g eines TEOS-Hydrolysates (hergestellt durch Rühren von 28,0 g TEOS und 10 g 0,01M Salzsäure bis zu einer klaren Lösung) werden unter Rühren zugegeben. Nach 1 Stunde Rühren werden 70,2 g Zirkonacetat (30%ig in Wasser) und 0,92 g Sr(NO₃)₂ zugegeben. Der pH-Wert der Lösung wird mit etwa 14,0 g 10%iger Essigsäure auf pH 3 eingestellt.

### Beispiel 3

Zu 1,12 g (3-Glycidoxypropyl)triethoxysilan (GPTES) und 1,20 g Kieselsol (Levasil 200s) werden 51,4 g Wasser und 6,68 g Kaliumacetat gegeben. Nach Einrühren des Kaliumsalzes werden 2,00 g TiO₂ (Degussa P25) zugegeben und mit einem Ultraturrax 30 min bei 15.000 U/min dispergiert. Die Dispersion kann direkt appliziert werden.

Die Lösungen aus Beispiel 1 bis 3 werden durch Fluten auf ein Glassubstrat (Beispiel 1) oder ein Stahlsubstrat (Vergleichsbeispiel 2 und Beispiel 3) aufgebracht und eine Stunde bei 500°C (2°C/min Aufheizrate) im Muffelofen getrocknet. Eine Vorhärtung kann bei niedrigeren Temperaturen erfolgen. Auf Glas erhält eine abriebfeste, transparente bzw. transluzente Beschichtung.

Zur Beurteilung des Rußabbaus wird auf die Beschichtung aus Beispiel 1 und Vergleichsbeispiel 2 eine Rußdispersion eines Modellrußes durch Fluten aufgetragen. Alternativ kann die Beschichtung auch mit Kerzenruß beaufschlagt werden. Zur Herstellung der Rußdispersion werden 1,8 g. Degussa Printex U in 60 g Isopropanol gegeben und mit einem Ultra-Turrax für 1 min bei 15000 U/min dispergiert. Die Substrate werden im Muffelofen ausgelagert. Vollständiger Rußabbau erfolgt auf Glas bei Temperaturen von 100 bis 500°C, bevorzugt bei 250 bis 430°C. Auf Stahl erfolgt der Rußabbau bei Temperaturen von 100 bis 450°C, bevorzugt 250 bis 400°C.

## Patentansprüche

1. Beschichtungsmaterial mit einer katalytischen Aktivität zur Reduktion der Verbrennungstemperatur von Ruß und organischen Substanzen, **dadurch gekennzeichnet, daß** das Beschichtungsmaterial
• 20 bis 90 Gew.-% Verbindungen von Nebengruppenmetallen oder von Elementen der 3. und 4. Hauptgruppe, ausgewählt aus der Gruppe bestehend aus Zirkonium-, Aluminium-, Silizium-, Titan-, Eisen-, Germanium- und Galliumverbindungen,
• 10 bis 80 Gew.-% Alkaliverbindungen
enthält, wobei der molare Anteil von Alkaliverbindungen höher ist als der molare Anteil von Verbindungen von Nebengruppenmetallen oder von Elementen der 3. oder 4. Hauptgruppe.

2. Beschichtungsmaterial gemäß Anspruch 1, **dadurch gekennzeichnet, daß** die Alkaliverbindungen aus der Gruppe bestehend aus Natrium-, Kalium-, Cäsium- und Rubidiumverbindungen ausgewählt sind.

3. Beschichtungsmaterial gemäß Anspruch 1, **dadurch gekennzeichnet, daß** das Beschichtungsmaterial mit einem Lösungsmittel, insbesondere mit Wasser, auf einen Feststoffgehalt zwischen 0,05 Gew.-% und 60 Gew.-%, vorzugsweise zwischen 2 und 20 Gew.-% verdünnt ist.

4. Beschichtungsmaterial gemäß einem der Ansprüche 1 bis 3, **dadurch gekennzeichnet, daß** das Beschichtungsmaterial im verdünnten oder unverdünnten Zustand auftragbar ist.

5. Verwendung des Beschichtungsmaterials gemäß einem der Ansprüche 1 bis 4, **dadurch gekennzeichnet, daß** das Beschichtungsmaterial auf ein Substrat appliziert und getrocknet wird.

6. Verwendung gemäß Anspruch 5, **dadurch gekennzeichnet, daß** das Substrat Glas, Metall, Halbmetall, Metalloxid, Kunststein, Naturstein, Beton, Putz, Keramik, Email, Glaskeramik, Kunststoff oder eine lackierte Oberfläche ist.

7. Verwendung gemäß Anspruch 5, **dadurch gekennzeichnet, daß** das Beschichtungsmaterial naßchemisch auf das Substrat appliziert wird, insbesondere durch Sprühen, Gießen, Fluten, Tauchen, Aufreiben, Schleudern, Walzen oder Drucken.

8. Verwendung gemäß Anspruch 5, **dadurch gekennzeichnet, daß** das Beschichtungsmaterial mit einer Schichtdicke von 10 nm bis 100 µm, insbesondere von 0,5 bis 20 µm appliziert wird.

9. Verwendung gemäß Anspruch 5, **dadurch gekennzeichnet, daß** die Trocknung in einem Temperaturbereich von etwa Raumtemperatur bis 1.000°C, insbesondere zwischen 100 und 600°C, während 1 Sekunde bis mehreren Stunden erfolgt.

10. Verwendung gemäß Anspruch 5, **dadurch gekennzeichnet, daß** die Trocknung in einem Umluftofen oder unter IR-Strahlung erfolgt.

11. Verwendung gemäß Anspruch 5, **dadurch gekennzeichnet, daß** die Trocknung in zwei Schritten mit einer Vorhärtung bei niedriger Temperatur und einem zweiten Trocknungsschritt bei höherer Temperatur erfolgt.

12. Verwendung des Beschichtungsmaterials gemäß den Ansprüchen 1 bis 4 zum Herstellen von Beschichtungen
• in Verbrennungsmotoren für Motorinnenräume, Kolben, Abgasanlagen und - filter, insbesondere Dieselpartikelfilter,
• auf Scheiben, Maschinenteilen, Rohren oder Kraftwerksteilen,
• in Kamininnenräumen und Brennkammern, insbesondere für Glas- und Stahleinsätze sowie Kaminsteine und Filtermatten,
• als Entschlackungshilfe in Kraftwerken,
• auf Backofensichtscheiben, Grillgeräten, Haushaltsgeräten, Kochplatten, insbesondere Keramikkochfeldern als Antihaftmittel,
• auf einem Träger zur Entfernung flüchtiger organischer Verbindungen aus der Raumluft, insbesondere nach Anreicherung auf der Beschichtung, oder
• zur Katalyse von chemischen Oxidationsprozessen für industrielle Anwendungen.

## Claims

1. Coating material having catalytic activity for reducing the combustion temperature of soot and organic substances, **characterised in that** the coating material consists of
• 20 to 90 wt. % of compounds of subgroup metals or of elements of the third or fourth main groups, selected from the group consisting of zirconium, aluminum, silicon, titanium, iron, germanium and gallium compounds,
• 10 to 80 wt. % of alkali compounds,
the molar proportion of alkali compounds being higher than the molar proportion of compounds of subgroup metals or of elements of the third or fourth main groups.

2. Coating material according to claim 1, **characterised in that** the alkali compounds are selected from the group consisting of sodium, potassium, caesium and rubidium compounds.

3. Coating material according to claim 1, **characterised in that** the coating material is diluted with a solvent, especially with water, to a solids content between 0.05 and 60 wt. %, preferable between 2 and 20 wt. %.

4. Coating material according to one of the claims 1 to 3, **characterised in that** the coating material can be applied in the diluted or undiluted state.

5. Use of the coating material according to one of the claims 1 to 4, **characterised in that** the coating material is applied to a substrate and dried.

6. Use according to claim 5, **characterised in that** the substrate is glass, metal, metalloid, metal oxide, synthetic stone, natural stone, concrete, plaster, ceramic, enamel, glass ceramic, plastic or a coated surface.

7. Use according to claim 5, **characterised in that** the coating material is applied to the substrate by means of a wet-chemical process, in particular by spraying, film casting, flooding, dip coating, wipe-on coating, spin coating, roll coating or printing.

8. Use according to claim 5, **characterised in that** the coating material is applied to give a coating thickness of 10 nm to 100 µm, in particular of 0.5 to 20 µm.

9. Use according to claim 5, **characterised in that** drying is effected at a temperature in the range from about room temperature to 1,000 °C, in particular at a temperature between 100 and 600 °C, during a period of one second to several hours.

10. Use according to claim 5, **characterised in that** drying is effected in a convection oven or under IR radiation.

11. Use according to claim 5, **characterised in that** drying is conducted in two stages, a lower temperature being used for pre-curing and a higher temperature being used in a second drying stage.

12. Use of the coating material according to claims 1 to 4 for producing coatings
• on the engine interiors, pistons, exhaust-gas systems and exhaust-gas filters, especially diesel particulate filters, of internal combustion engines,
• on panes, machine parts, pipes or power-plant components,
• in chimney interiors and combustion chambers, in particular for glass and steel inserts and for chimney stones and filter mats,
• as deslagging agents in power plants,
• as anti-stick agents on see-through oven doors, grilling devices, household appliances and hotplates, in particular ceramic hobs,
• on a carrier for the removal of volatile organic compounds from indoor ambient air, especially after concentration on the coating, or
• to catalyse chemical oxidation processes in industrial applications.

## Revendications

1. Matériau de revêtement ayant une activité catalytique pour réduire la température de combustion de suies et de substances organiques, **caractérisé en ce que** le matériau de revêtement consiste en
• 20 à 90 % en poids de composés de métaux de transition ou d'éléments du 3ème et 4ème groupe principal, choisis dans le groupe constitué des composés du zirconium, de l'aluminium, du silicium, du titane, du fer, du germanium et du gallium,
• 10 à 80 % en poids de composés alcalins,
la fraction molaire des composés alcalins étant supérieure à la fraction/teneur molaire des composés des métaux de transition ou des éléments du 3^{ème} ou 4^{ème} groupe principal.

2. Matériau de revêtement selon la revendication 1, **caractérisé en ce que** les composés alcalins sont choisis dans le groupe constitués des composés du sodium, du potassium, du césium et du rubidium.

3. Matériau de revêtement selon la revendication 1, **caractérisé en ce que** le matériau de revêtement est dilué avec un solvant, notamment avec de l'eau, jusqu'à une teneur en matière solide comprise entre 0,05 % en poids et 60 % en poids, de préférence entre 2 et 20 % en poids.

4. Matériau de revêtement selon l'une des revendications à 3, **caractérisé en ce que** le matériau de revêtement peut être appliqué à l'état dilué ou non dilué.

5. Utilisation d'un matériau de revêtement selon l'une des revendications 1 à 4, **caractérisée en ce que** le matériau de revêtement est appliqué sur un substrat et séché.

6. Utilisation selon la revendication 5, **caractérisée en ce que** le substrat est du verre, un métal, un métalloïde, un oxyde de métal, une pierre artificielle, une pierre naturelle, du béton, un enduit, une céramique, un émail, une vitrocéramique, une matière plastique ou une surface vernie.

7. Utilisation selon la revendication 5, **caractérisée en ce que** le matériau de revêtement est appliqué sur le substrat chimiquement par voie humide, notamment par pulvérisation, arrosage, recouvrement, immersion, frottement, projection, laminage ou impression.

8. Utilisation selon la revendication 5, **caractérisée en ce que** le matériau de revêtement est appliqué avec une épaisseur de couche comprise entre 10 nm et 10 µm, notamment entre 0,5 et 20 µm.

9. Utilisation selon la revendication 5, **caractérisée en ce que** le séchage est réalisé dans une plage de températures allant de la température ambiante jusqu'à 1 000 °C, notamment entre 100 et 600 °C, pendant un intervalle de temps compris entre 1 seconde et plusieurs heures.

10. Utilisation selon la revendication 5, **caractérisée en ce que** le séchage est réalisé dans un four à circulation d'air ou sous un rayonnement IR,

11. Utilisation selon la revendication 5, **caractérisée en ce que** le séchage est réalisé en deux étapes avec un prédurcissement à basse température et un une deuxième étape de séchage à température plus élevée.

12. Utilisation du matériau de revêtement selon la revendication 1 à 4 pour la fabrication de revêtement
• dans des moteurs à combustion pour des chambres intérieures du moteur, des pistons, des dispositifs de gaz d'échappement et des filtres pour gaz d'échappement, notamment des filtres à particules pour diesel,
• sur des vitres, des pièces de machine, des tubes ou des pièces de centrales thermiques,
• dans les espaces internes de cheminées et chambres de combustion, notamment pour les inserts en verre et en acier ainsi que les briques réfractaires et les éléments filtrants,
• comme moyens de décrassage dans les centrales thermiques,
• sur des vitres de fours de cuisson, des appareils de barbecue, des appareils ménagers, des plaques de cuisson, notamment comme moyens antiadhésifs pour les plaques vitrocéramiques,
• sur un support pour éliminer de l'air ambiant des composés organiques volatiles, notamment après enrichissement sur le revêtement, ou
• pour la catalyse de processus d'oxydation chimique pour application industrielle.
